# EUROPEAN PATENT APPLICATION

(11) **EP 4 375 322 A1**
(43) Date of publication of application: **29.05.2024**
(21) Application number: 23210365.5
(22) Date of filing: 16.11.2023
(51) Int. Cl.: C08K 3/22, C08K 3/34, C08J 3/12, D03D 15/52

(54) **METHOD OF MANUFACTURING HIGH-EFFICIENT FAR-INFRARED RADIATION EMITTING COMPOSITION AND PRODUCT THEREOF**

(30) Priority: 17.11.2022 TW 111144006
(71) Applicant: Any Color International Limited., Tainan City 710 (TW)
(72) Inventor: YANG-KUN, Ou, Tainan City 710 (TW); SHIAO-WU, Lai, Tainan City 710 (TW); CHUNG-I, Chien, Tainan City 710 (TW); YIN-LUNG, Liou, Tainan City 710 (TW)
(74) Representative: Kanzlei Dr. Negendanck Patentmanufaktur

(57) **Abstract**

A high-efficiency far-infrared radiation emitting composition manufacturing method includes the steps of: preparing a far-infrared radiation emitting composition by a formula including a far-infrared material, an additive containing a dispersant and a thermal stabilizer, and a thermoplastic; and obtaining a product of the high-efficiency far-infrared radiation emitting composition according to the formula by a blending and kneading process; and the product includes the far-infrared radiation emitting composition; at least one substrate provided to be attached to the far-infrared radiation emitting composition; and the product is formed according to a predetermined proportion of the far-infrared radiation emitting composition formula by the blending and kneading process and attached to the substrate.
S1
Prepare a far-infrared radiation emitting composition formula.
S2
Carry out a mixing process.

## Description

### BACKGROUND

### Technical Field

The present disclosure relates to a method and product, and more particularly relates to a method of manufacturing a high-efficiency far-infrared radiation emitting composition and a product thereof which can emit far-infrared rays at room temperature.

### Description of Related Art

Traditional products with a far-infrared function such as far-infrared clothes, far-infrared pants, far-infrared cushions, etc. generally have a structure nothing more than putting a radiating base stone with the far-infrared radiation emitting function onto the clothes, pants, cushions, or attaching objects, or into a plurality of pockets of the cushion. However, the pockets can only be arranged in several single points of the attaching objects, not only taking much time and labor for the manufacturing, but also limiting the far-infrared emission to the single-point radiation range. Furthermore, the pockets may not be sewed to the required positions of the attaching objects for different purposes, the radiating base stone may not be aligned precisely with the required position of a user's body, or the radiating base stone may be displaced with the user's movement and fail to align with the part of the user's body that needs far-infrared rays. In addition, the radiating base stone of the traditional far-infrared products cannot be combined with the materials of the attaching objects, which makes the far-infrared products tremendously limited and inapplicable to various products.

The far-infrared emission cannot cover the entire attaching object, so that the far-infrared rays with a wider wavelength cannot be emitted, which results in low dispersion and poor far-infrared radiation effect, and greatly reduces its practicability. This is what the persons skilled in the art and consumers are eager to break through.

### SUMMARY

In view of the aforementioned deficiencies of the related art, it is a primary objective of the present disclosure to overcome the deficiencies of the related art by providing a method of manufacturing a high-efficiency far-infrared radiation emitting composition and a product thereof. This disclosure provides a formula to manufacture the composition and product with the advantages of excellent production efficiency, stable quality, and high-efficiency far-infrared emission, and the product and composition can emit far-infrared rays with a wider wavelength, and their manufacturing process is simple and stable.

A secondary objective of this disclosure is to provide a method of manufacturing a high-efficiency far-infrared radiation emitting composition and a product thereof, and to manufacture a product according to a far-infrared radiation emitting composition formula, and attach the high-efficiency far-infrared radiation emitting composition to at least one substrate.

A further objective of this disclosure is to provide a method of manufacturing a high-efficiency far-infrared radiation emitting composition and a product thereof, and attach a far-infrared material of the far-infrared radiation emitting composition formula to the substrate to stabilize the manufacturing process and improve the high-efficiency far-infrared emissivity of the substrate by the dispersity of the far-infrared material.

The problem to be solved by this disclosure is to overcome the drawbacks of the traditional products with a far-infrared function such as far-infrared clothes, far-infrared pants, far-infrared cushions, since these products generally have a structure with a radiating base stone of the far-infrared radiation emitting function attached to the clothes, pants, cushions, or attaching objects, or into a plurality of pockets of the cushion. However, the pockets can only be arranged in several single points of the attaching objects, not only taking much time and labor for the manufacturing, but also limiting the far-infrared emission to the single-point radiation range. Furthermore, the pockets may not be sewed onto the required positions of the attaching objects for different purposes, the radiating base stone may not be aligned precisely with the required position of a user's body, or the radiating base stone may be displaced with the user's movement and fail to align with the part of the user's body that needs far-infrared rays. In addition, the radiating base stone of the traditional far-infrared products cannot be combined with the materials of the attaching objects, which makes the far-infrared products tremendously limited and inapplicable to various products. The far-infrared emission cannot be dispersed to the entire attaching object, and far-infrared rays with a wider wavelength cannot be emitted, and thus resulting in low dispersion, bad far-infrared radiation effect, and low practicality.

To achieve the aforementioned and other objective, this disclosure provides a method of manufacturing a high-efficiency far-infrared radiation emitting composition, and the method comprises the steps of:
preparing a far-infrared radiation emitting composition formula which comprises a far-infrared material, an additive comprising a dispersant and a thermal stabilizer, and a thermoplastic, and the far-infrared radiation emitting composition formula comprising the weight percentages of 0.6∼2%wt for the far-infrared material, 1∼10%wt for the dispersant, 0.2∼1%wt for the thermal stabilizer, and 90∼100%wt for the thermoplastic; and
performing a mixing process to obtain the far-infrared radiation emitting composition formula through a blending and kneading process.

Wherein, the step of performing the mixing process to obtain the far-infrared radiation emitting composition formula to form a granular plastic pellet or a powdered plastic powder through a polymerization in a reaction tank, a single screw, a twin screw, or other blending and kneading processes.

Wherein, the plastic pellets or plastic powder is manufactured based on the far-infrared radiation emitting composition formula through the blending and kneading process, and applied to a product selected from a group consisting of a yarn, a film and a wire through various different processing methods.

Wherein, the far-infrared material of the far-infrared radiation emitting composition formula comprises zirconia mixed with natural silicate mineral soil.

Wherein, the dispersant of the additive of the far-infrared radiation emitting composition formula is one or any combination selected from the group consisting of a paraffin series, a fatty acid series, a low molecular wax series and esters.

Wherein, the thermal stabilizer of the additive of the far-infrared radiation emitting composition formula is one or any combination selected from a group consisting of a phosphate ester series, an organic tin, a rare earth stabilizer, a metal soap series and a calcium zinc series.

Wherein, the thermoplastic of the far-infrared radiation emitting composition formula comprises thermoplastic polyester, polyurethane, polyethylene, polypropylene, ethylene terephthalate, nylon, silicon, and rubber. To achieve the aforementioned and other objective, this disclosure provides a product of a high-efficiency far-infrared radiation emitting composition, and the product comprises:
a far-infrared radiation emitting composition formula, comprising a far-infrared material, an additive, and a thermoplastic, and the additive comprising a dispersant and a thermal stabilizer, and the far-infrared material being a far infrared particle or a far infrared powder; and
at least one substrate, provided to be attached by the far-infrared radiation emitting composition formula;
wherein, the product of the far-infrared radiation emitting composition is formed according to predetermined proportion of the far-infrared radiation emitting composition formula by a blending and kneading process.

Wherein, the far-infrared radiation emitting composition formula comprises 0.6∼2%wt far-infrared material, 1∼10%wt dispersant, 0.2∼1%wt thermal stabilizer, and 90∼100%wt thermoplastic.

Wherein, the substrate is one or any combination of the materials selected from the group consisting of glass, fiber, metal, plastic, ceramic and coating.

Wherein, the far-infrared radiation emitting composition formula and the substrate are attached through one or any combination of the relationships selected from the group consisting of mixing, coating, lamination and impregnation.

Wherein, the product of the far-infrared radiation emitting composition is formed according to a predetermined proportion of the far-infrared radiation emitting composition formula and attached to the substrate by a method selected from the group consisting of a polymerization in a reaction tank, or a single-screw, twin-screw or other blending and kneading process.

Compared with the effects of the related art, this disclosure provides the far-infrared radiation emitting composition formula with the advantages of good production efficiency, stable quality and high efficiency and comprising the far-infrared material, the additive, and the thermoplastic, and the additive comprises the dispersant and the thermal stabilizer, which can emit far-infrared rays with a wider wavelength, and the manufacturing process is simple and stable. This disclosure also provides a product manufactured according to the far-infrared radiation emitting composition formula, and the far-infrared radiation emitting composition formula is attached to the substrate. By the characteristic of high dispersion of the far-infrared material of the far-infrared radiation emitting composition formula, this disclosure provides a stable manufacturing process, improves the high-efficiency far-infrared emissivity of the substrate, and significantly increases the practical utilization in the industry. Further, this disclosure is novel and inventive.

### BRIEF DESCRIPTION OF THE DRAWINGS

FIG. 1 is a flow chart of a method of manufacturing a high-efficiency far-infrared radiation emitting composition in accordance with this disclosure;
FIG. 2 is an exploded view of a product of a high-efficiency far-infrared radiation emitting composition in accordance with this disclosure; and
FIG. 3 is a cross-sectional view of a product of a high-efficiency far-infrared radiation emitting composition in accordance with this disclosure.

### DESCRIPTION OF THE EMBODIMENTS

This disclosure will now be described in more detail with reference to the accompanying drawings that show various embodiments of this disclosure. It is intended that the embodiments and drawings disclosed herein are to be considered illustrative rather than restrictive, and also noteworthy that the drawings are not necessary drawn according to the real proportion and precise configuration and these attached drawings should not limit the scope of the patent of this disclosure in actual implementation.

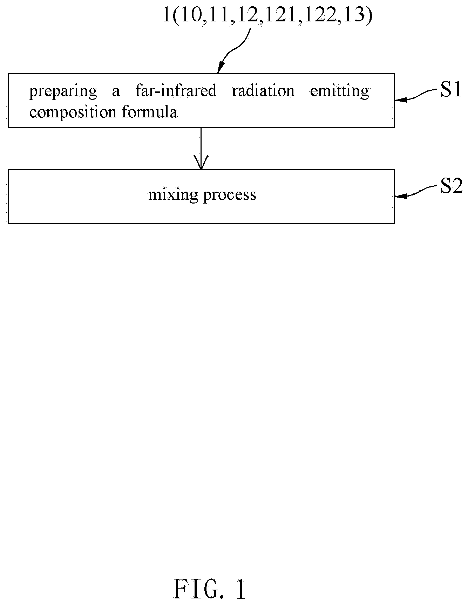

With reference to FIG. 1 for the flow chart of a method of manufacturing a high-efficiency far-infrared radiation emitting composition in accordance with a preferred embodiment of this disclosure, the manufacturing method includes the steps of: preparing a far-infrared radiation emitting composition formula (S 1) and a mixing process (S2).

In the preparation of the far-infrared radiation emitting composition formula (S1), the far-infrared radiation emitting composition formula 1 comprises a far-infrared material 11, an additive 12 containing a dispersant 121 and a thermal stabilizer 122, and a thermoplastic 13; the far-infrared radiation emitting composition formula 1 contains 0.6∼2%wt far-infrared material 11, 1~10%wt dispersant 121, 0.2∼1%wt thermal stabilizer 122, and 90∼100%wt thermoplastic 13. In an embodiment of this disclosure, the far-infrared material 11 of the far-infrared radiation emitting composition formula 1 includes but not limited to zirconia mixed with natural silicate mineral soil; the dispersant 121 of the additive 12 of the far-infrared radiation emitting composition formula 1 is one or any combination selected from the group consisting of a paraffin series, a fatty acid series, a low molecular wax series and esters; the thermal stabilizer 122 of the additive 12 of the far-infrared radiation emitting composition formula 1 one or any combination selected from a group consisting of a phosphate ester series, an organic tin, a rare earth stabilizer, a metal soap series and a calcium zinc series; and the thermoplastic 13 of the far-infrared radiation emitting composition formula 1 comprises thermoplastic polyester, polyurethane, polyethylene, polypropylene, ethylene terephthalate, nylon, silicon, rubber.

In the mixing process (S2), the far-infrared radiation emitting composition formula 1 is obtained through polymerization in a reaction tank, or single screw, twin screw or other blending and kneading process to produce a plastic pellet in a granular form or a plastic powder 10 in a powdered form, and the plastic pellet or plastic powder 10 of the far-infrared radiation emitting composition formula 1 manufactured by the blending and kneading process are milky white particles which are formed by various manufacturing methods and applied to a product selected from the group consisting of a yarn, film and wire.

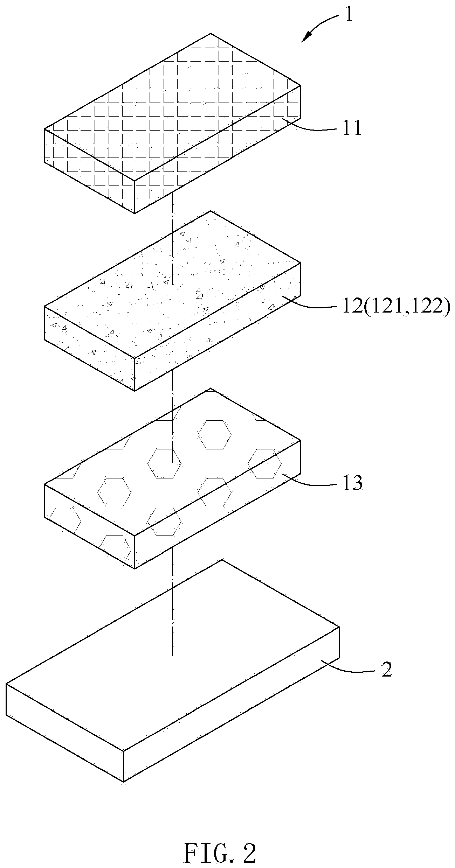

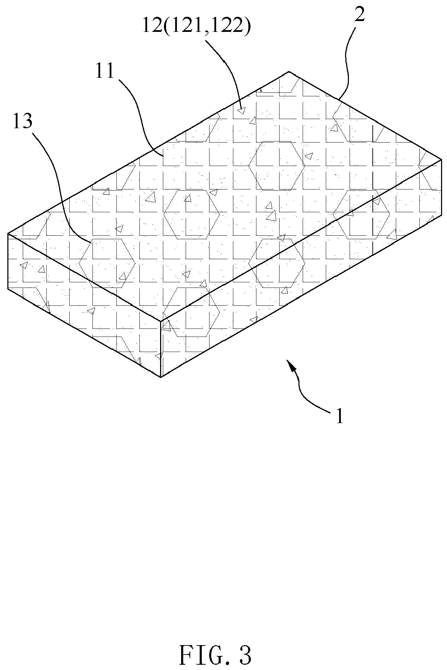

With reference to FIGS. 2 and 3 for the exploded view and cross-sectional view of a product of a high-efficiency far-infrared radiation emitting composition in accordance with a preferred embodiment of this disclosure respectively, the product comprises a far-infrared radiation emitting composition formula 1, and at least one substrate 2.

The far-infrared radiation emitting composition formula 1 includes a far-infrared material 11, an additive 12, and a thermoplastic 13, and the additive 12 includes a dispersant 121 and a thermal stabilizer 122; the far-infrared radiation emitting composition formula 1 contains 0.6∼2%wt far-infrared material 11, 1∼10%wt dispersant 121, 0.2∼1%wt thermal stabilizer 122, and 90∼100%wt thermoplastic 13; and the far-infrared material 11 is a far infrared particle or a far-infrared powder, but this disclosure is not limited to the above arrangements.

The at least one substrate 2 is provided to be attached to of the far-infrared radiation emitting composition formula 1; a product is formed according to a predetermined proportion of the far-infrared radiation emitting composition formula 1 by a polymerization in a reaction tank or a single-screw, twin-screw or other blending and kneading process and attached to the substrate; the substrate 2 is one or any combination selected from the group consisting of glass, fiber, metal, plastic, ceramic and coating; and the far-infrared radiation emitting composition formula 1 and the substrate 2 are attached to each other through one or any combination of the relationships selected from the group consisting of mixing, coating, lamination and impregnation.

In another embodiment of this disclosure, the method of manufacturing a high-efficiency far-infrared radiation emitting composition adopts the far infrared powder of the high-efficiency the far-infrared material 11, the dispersant 121, the thermal stabilizer 122 and the thermoplastic 13, according to a predetermined proportion of the far-infrared radiation emitting composition formula 1 through a polymerization in a reaction tank, or a single-screw, twin-screw or other blending and kneading process to form particles, and the proportion of the far infrared powder, the dispersant 121 and the thermal stabilizer 122 can make the composition dispersed evenly and the manufacturing process stable. Various high-efficiency far-infrared products can be manufactured by screw manufacturing process.

This disclosure provides a far-infrared radiation emitting composition formula 1 with the advantages of good production efficiency, stable quality and high efficiency and the far-infrared radiation emitting composition formula 1 comprises the far-infrared material 11, the additive 12, and the thermoplastic 13; the additive 12 contains the dispersant 121 and the thermal stabilizer 122, and thus can emit far-infrared rays with a wider wavelength, and the processing process is simple and stable. This disclosure also provides a product manufactured according to the far-infrared radiation emitting composition formula, and the far-infrared radiation emitting composition formula 1 is attached to the substrate 2. By the characteristic of high dispersion of the far-infrared material 11 of the far-infrared radiation emitting composition formula 1, this disclosure provides a stable manufacturing process, improves the high-efficiency far-infrared emissivity of the substrate 2, and significantly increases the practical utilization in the industry. Further, this disclosure is novel and inventive.

## Claims

1. A method of manufacturing a high-efficiency far-infrared radiation emitting composition, comprising the steps of:
preparing a far-infrared radiation emitting composition formula which comprises a far-infrared material, an additive comprising a dispersant and a thermal stabilizer, and a thermoplastic, and the far-infrared radiation emitting composition formula comprising the weight percentages of 0.6∼2%wt for the far-infrared material, 1∼10%wt for the dispersant, 0.2∼1%wt for the thermal stabilizer, and 90∼100%wt for the thermoplastic; and
performing a mixing process to obtain the far-infrared radiation emitting composition formula through a blending and kneading process.

2. The method of manufacturing a high-efficiency far-infrared radiation emitting composition according to claim 1, wherein the step of performing the mixing process to obtain the far-infrared radiation emitting composition formula to form a granular plastic pellet or a powdered plastic powder through a polymerization in a reaction tank, a single screw, a twin screw, or other blending and kneading processes.

3. The method of manufacturing a high-efficiency far-infrared radiation emitting composition according to claim 1, wherein, the plastic pellets or plastic powder is manufactured according to the far-infrared radiation emitting composition formula through the blending and kneading process, and applied to a product selected from a group consisting of a yarn, a film and a wire through various different processing methods.

4. The method of manufacturing a high-efficiency far-infrared radiation emitting composition according to claim 1, wherein the far-infrared material of the far-infrared radiation emitting composition formula comprises zirconia mixed with natural silicate mineral soil.

5. The method of manufacturing a high-efficiency far-infrared radiation emitting composition according to claim 1, wherein the dispersant of the additive of the far-infrared radiation emitting composition formula is one or any combination selected from the group consisting of a paraffin series, a fatty acid series, a low molecular wax series and esters.

6. The method of manufacturing a high-efficiency far-infrared radiation emitting composition according to claim 1, wherein the thermal stabilizer of the additive of the far-infrared radiation emitting composition formula is one or any combination selected from a group consisting of a phosphate ester series, an organic tin, a rare earth stabilizer, a metal soap series and a calcium zinc series.

7. The method of manufacturing a high-efficiency far-infrared radiation emitting composition according to claim 1, wherein the thermoplastic of the far-infrared radiation emitting composition formula comprises thermoplastic polyester, polyurethane, polyethylene, polypropylene, ethylene terephthalate, nylon, silicon, and rubber.

8. A product of a high-efficiency far-infrared radiation emitting composition, comprising:
a far-infrared radiation emitting composition formula, comprising a far-infrared material, an additive, and a thermoplastic, and the additive comprising a dispersant and a thermal stabilizer, and the far-infrared material being a far infrared particle or a far infrared powder; and
at least one substrate, provided to be attached by the far-infrared radiation emitting composition formula;
wherein, the product of the far-infrared radiation emitting composition is formed according to a predetermined proportion of the far-infrared radiation emitting composition formula by a blending and kneading process.

9. The product of a high-efficiency far-infrared radiation emitting composition according to claim 8, wherein the far-infrared radiation emitting composition formula comprises 0.6~2%wt far-infrared material, 1∼10%wt dispersant, 0.2∼1%wt thermal stabilizer, and 90∼100%wt thermoplastic.

10. The product of a high-efficiency far-infrared radiation emitting composition according to claim 8, wherein the substrate is one or any combination selected from the group consisting of glass, fiber, metal, plastic, ceramic and coating.

11. The product of a high-efficiency far-infrared radiation emitting composition according to claim 8, wherein the far-infrared radiation emitting composition formula and the substrate are attached through one or any combination of the relationships selected from the group consisting of mixing, coating, lamination and impregnation.

12. The product of a high-efficiency far-infrared radiation emitting composition according to claim 8, wherein the product of the far-infrared radiation emitting composition is formed according to a predetermined proportion of the far-infrared radiation emitting composition formula and attached to the substrate by a method selected from the group consisting of a polymerization in a reaction tank, or a single-screw, twin-screw or other blending and kneading process.
